# EUROPEAN PATENT APPLICATION

(11) **EP 3 929 716 A1**
(43) Date of publication of application: **29.12.2021**
(21) Application number: 20791516.6
(22) Date of filing: 11.04.2020
(51) Int. Cl.: G06F 3/0488

(54) **METHOD AND ELECTRONIC APPARATUS FOR ADDING ANNOTATION**

(30) Priority: 17.04.2019 CN 201910310631
(71) Applicant: Huawei Technologies Co., Ltd., Shenzhen, Guangdong 518129 (CN)
(72) Inventor: CAI, Wendi, Shenzhen, Guangdong 518129 (CN)
(74) Representative: Grünecker Patent- und Rechtsanwälte PartG mbB
(86) International application number: PCT/CN2020/084348
(87) International publication number: WO 2020/211709

(57) **Abstract**

A comment addition method and an electronic device are provided, and relate to the field of terminal technologies, so that the electronic device can enter a comment mode in any interface that is being displayed to add a comment, so as to enrich an application scenario of a stylus and improve use experience of using the stylus by a user. The method includes: displaying, by an electronic device, a first interface of a first application; entering, by the electronic device, a comment mode in the first interface in response to a preset trigger operation, and in the comment mode, displaying, by the electronic device in the first interface, a first comment added by a user; displaying, by the electronic device, a second interface of a second application; and entering, by the electronic device, a comment mode in the second interface in response to the trigger operation, and in the comment mode, displaying, by the electronic device in the second interface, a second comment added by the user.

## Description

This application claims priority to Chinese Patent Application No. 201910310631.6, filed with the China National Intellectual Property Administration on April 17, 2019 and entitled "COMMENT ADDITION METHOD AND ELECTRONIC DEVICE", which is incorporated herein by reference in its entirety.

### TECHNICAL FIELD

This application relates to the field of terminal technologies, and in particular, to a comment addition method and an electronic device.

### BACKGROUND

Currently, some manufacturers have installed styluses on electronic devices such as mobile phones and tablet computers. A user may use the stylus to record comment content such as a text and a pattern on the electronic device.

For example, a mobile phone is used as an electronic device. When a user uses a stylus to contact a touch panel of the mobile phone, the mobile phone may detect that an electrical signal (for example, a capacitive signal) of a contact changes, to identify a location of the contact of the stylus on the touch panel, and then record and identify comment content entered on the touch panel by using the stylus.

However, an additional interface needs to be set for a third-party application installed on the mobile phone to support the user in enabling a handwriting comment mode in the third-party application. To be specific, if a running application does not support use of the handwriting comment mode, the user cannot use the stylus to handwrite a comment in a current application interface. This greatly reduces a use scenario and range of the stylus, and causes poor use experience of the stylus.

### SUMMARY

This application provides a comment addition method and an electronic device, so that the electronic device can enter a comment mode in any interface that is being displayed to add a comment, so as to enrich an application scenario of a stylus and improve use experience of using the stylus by a user.

To achieve the foregoing objectives, the following technical solutions are used in this application.

According to a first aspect, this application provides a comment addition method, including: An electronic device displays a first interface of a first application. If the electronic device detects that a user performs a preset trigger operation, the electronic device may enter a comment mode in the first interface. In the comment mode, the electronic device may receive a first comment added by the user in the first interface that is being displayed, and display the first comment in the first interface. Similarly, when the electronic device displays a second interface (different from the first interface) of a second application (different from the first application), if the electronic device detects that the user performs the trigger operation, the electronic device may enter a comment mode in the second interface. Similarly, in the comment mode, the electronic device may receive a second comment added by the user in the second interface that is being displayed, and display the second comment in the second interface.

To be specific, according to the comment addition method provided in this application, when the electronic device is displaying any interface, the electronic device may enter the comment mode to receive the comment added by the user. The comment addition method does not impose any requirement on the display interface that is being displayed, and a corresponding interface does not need to be added to an application for adaptation. Therefore, a use scenario of the comment mode can be enriched and use experience of the user can be improved.

In a possible implementation, the first interface is an interface that is of the first application and that can be dynamically updated, instead of an interface in a picture format. For example, after entering the comment mode in the first interface, the electronic device may further receive a first editing operation (for example, a play operation, a copy operation, a slide operation, or a tap operation) performed by the user in the first interface. The electronic device may correspondingly edit content in the first interface in response to the first editing operation, to update the display content in the first interface. Similarly, the second interface is also an interface that is of the second application and that can be dynamically updated. After entering the comment mode in the second interface, the electronic device may further receive a second editing operation performed by the user in the second interface. Similarly, the electronic device may correspondingly edit content in the second interface in response to the second editing operation, to update the display content in the second interface.

In a possible implementation, that the electronic device enters a comment mode in the first interface specifically means that the electronic device superimposes a comment layer on the first interface, where the comment layer includes a first transparent region corresponding to the first interface. In this case, that the electronic device displays, in the first interface, the first comment added by the user specifically means that the electronic device displays the first comment entered by the user into the first transparent region in the first interface.

To be specific, after entering the comment mode, the electronic device superimposes the comment layer that includes the transparent region on the first interface, so that the user can view display content in the first interface through the transparent region. Further, the user can add the first comment to the transparent region corresponding to the first interface. In this way, adding the comment by the user to the transparent layer and running the first application by the electronic device are two relatively independent processes, and therefore normal running of the first application is not affected when the user adds the comment.

In a possible implementation, after the electronic device displays, in the first interface, the first comment added by the user, the method further includes: The electronic device may display a third interface of the first application in response to a slide operation of a finger of the user, where a second transparent region in the comment layer is superimposed on the third interface. To be specific, in the comment mode, when the electronic device displays the third interface following the first interface through screen scrolling, the electronic device may synchronously scroll the transparent region at the comment layer, so that the new second transparent region is superimposed on the third interface.

In this case, after the electronic device displays the third interface of the first application, the method further includes: The electronic device may receive, in the second transparent region, a third comment entered by the user in the third interface, and display the third comment in the third interface. In this way, in the comment mode, the electronic device may add a plurality of comments to different display interfaces of an application.

In a possible implementation, after the electronic device displays the first comment added by the user in the first interface, the method further includes: in response to a saving operation entered by the user, the electronic device performs a screenshot operation on the first interface that includes the first comment, to obtain a first picture. The electronic device saves the first picture. To be specific, the electronic device may save, in a screenshot manner, the comment added by the user. Certainly, the electronic device may alternatively save, in another format, the comment currently added by the user. This is not limited in this embodiment of this application.

In a possible implementation, when the electronic device performs the screenshot operation on the first interface that includes the first comment, the electronic device may further display a first notification message, where the first notification message is used to prompt the user that the first comment is being saved.

In a possible implementation, after the electronic device displays the third comment entered by the user into the second transparent region in the third interface, the method further includes: in response to a saving operation entered by the user, the electronic device performs a screenshot operation on the first interface and the third interface that respectively include the first comment and the third comment, to obtain a second picture. The electronic device saves the second picture. To be specific, when the user adds a plurality of comments to different interfaces, the electronic device may save, in a long screenshot manner, the plurality of comments added by the user.

In a possible implementation, when the electronic device performs the screenshot operation on the first interface and the third interface that respectively include the first comment and the third comment, the electronic device may further display a second notification message, where the second notification message is used to prompt the user that the first comment and the second comment are being saved.

In a possible implementation, the electronic device may save the first picture in a memo application. Similarly, the electronic device also saves the second picture in the memo application.

In a possible implementation, a folder used to save a comment may be preset in the memo application. In this case, the first picture and the second picture may be saved in the preset folder of the memo application, to facilitate search by the user.

In a possible implementation, a search bar may be set in the memo application; and the method further includes: The electronic device receives a keyword entered by the user in the search bar, where the keyword may be a text in the first picture. In response to a search operation entered by the user, the electronic device may display a memo list that is in the memo application and that includes the keyword, where the memo list includes a memo of the first picture. To be specific, the electronic device may retrieve, based on the keyword entered by the user, a comment related to the keyword, so that the user can quickly find saved comment content in the memo application.

In a possible implementation, when the electronic device saves the first picture, the method further includes: The electronic device saves a correspondence between the first picture and the first interface. Further, after the electronic device saves the first picture, the method further includes: if the electronic device detects that the user selects the first picture in the memo application, the electronic device may open the first application to display the first interface corresponding to the first picture. Alternatively, if the electronic device detects that the electronic device opens the first application to display the first interface, the electronic device may display a third notification message, where the third notification message is used to prompt the user that the comment associated with the first interface is found, so that the user can view, in a timely manner, a comment previously made on related browsed content.

In a possible implementation, the trigger operation includes a preset operation performed by the user on a stylus; and both the first comment and second comment are comments added by the user by using the stylus.

In a possible implementation, the comment layer further includes a toolbar, and the toolbar may include one or more of an exit option, a save option, an eraser option, a line thickness option, and a line color option. These options are used to adjust comment content in a current comment addition process.

According to a second aspect, this application provides an electronic device, including a touchscreen, one or more processors, a memory, and one or more computer programs. The processor is coupled to each of the touchscreen, a communications module, and the memory. The one or more computer programs are stored in the memory. When the electronic device runs, the processor executes the one or more computer programs stored in the memory, so that the electronic device performs the comment addition method according to any one of the foregoing implementations.

According to a third aspect, this application provides a computer storage medium, including computer instructions. When the computer instructions are run on an electronic device, the electronic device is enabled to perform the comment addition method according to any one of the implementations of the first aspect.

According to a fourth aspect, this application provides a computer program product. When the computer program product runs on an electronic device, the electronic device is enabled to perform the comment addition method according to any one of the implementations of the first aspect.

It may be understood that the electronic device according to the second aspect, the computer storage medium according to the third aspect, and the computer program product according to the fourth aspect that are provided above are all configured to perform the corresponding method provided above. Therefore, for beneficial effects that can be achieved by the electronic device, the computer storage medium, and the computer program product, refer to beneficial effects in the corresponding method provided above. Details are not described again herein.

### BRIEF DESCRIPTION OF DRAWINGS

FIG. 1 is a schematic structural diagram 1 of an electronic device according to an embodiment of this application;
FIG. 2 is a schematic diagram of an application scenario of an electronic device and a stylus according to an embodiment of this application;
FIG. 3 is a schematic architectural diagram of an operating system in an electronic device according to an embodiment of this application;
FIG. 4(a) and FIG. 4(b) are a schematic diagram of a comment addition scenario according to an embodiment of this application;
FIG. 5 is a schematic interaction diagram of a comment addition method according to an embodiment of this application;
FIG. 6(a) and FIG. 6(b) are a schematic diagram 1 of a scenario of a comment addition method according to an embodiment of this application;
FIG. 7 is a schematic diagram 2 of a scenario of a comment addition method according to an embodiment of this application;
FIG. 8 is a schematic diagram 3 of a scenario of a comment addition method according to an embodiment of this application;
FIG. 9 is a schematic diagram 4 of a scenario of a comment addition method according to an embodiment of this application;
FIG. 10(a) and FIG. 10(b) are a schematic diagram 5 of a scenario of a comment addition method according to an embodiment of this application;
FIG. 11(a) and FIG. 11(b) are a schematic diagram 6 of a scenario of a comment addition method according to an embodiment of this application;
FIG. 12 is a schematic diagram 7 of a scenario of a comment addition method according to an embodiment of this application;
FIG. 13(a) and FIG. 13(b) are a schematic diagram 8 of a scenario of a comment addition method according to an embodiment of this application;
FIG. 14 is a schematic diagram 9 of a scenario of a comment addition method according to an embodiment of this application;
FIG. 15 is a schematic diagram 10 of a scenario of a comment addition method according to an embodiment of this application;
FIG. 16 is a schematic diagram 11 of a scenario of a comment addition method according to an embodiment of this application;
FIG. 17(a) and FIG. 17(b) are a schematic diagram 12 of a scenario of a comment addition method according to an embodiment of this application;
FIG. 18(a) and FIG. 18(b) are a schematic diagram 13 of a scenario of a comment addition method according to an embodiment of this application;
FIG. 19 is a schematic structural diagram 2 of an electronic device according to an embodiment of this application; and
FIG. 20 is a schematic structural diagram 3 of an electronic device according to an embodiment of this application.

### DESCRIPTION OF EMBODIMENTS

The following describes implementations of the embodiments in detail with reference to the accompanying drawings.

For example, a comment addition method provided in the embodiments of this application may be applied to an electronic device such as a mobile phone, a tablet computer, a laptop computer, an ultra-mobile personal computer (ultra-mobile personal computer, UMPC), a handheld computer, a netbook, a personal digital assistant (personal digital assistant, PDA), a wearable electronic device, or a virtual reality device. This is not limited in the embodiments of this application.

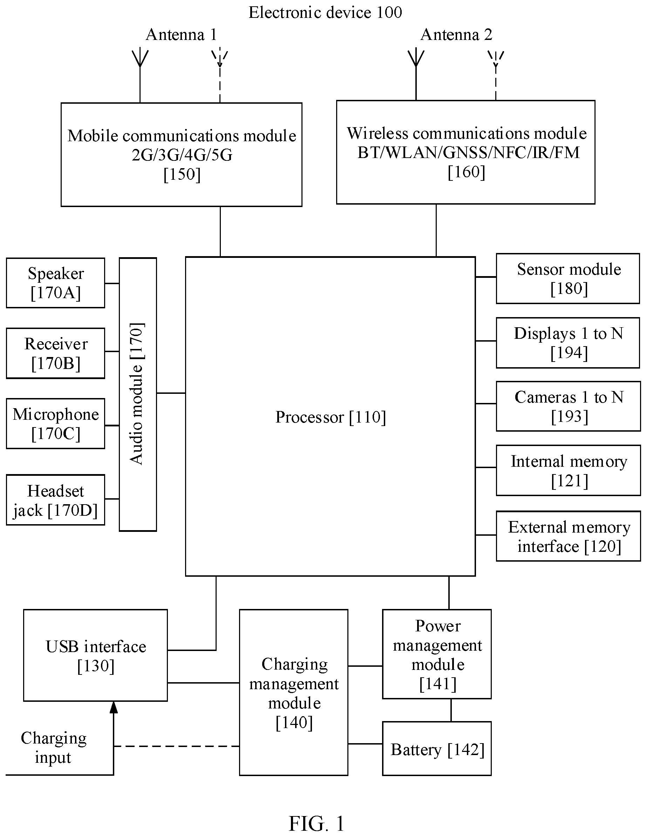

For example, FIG. 1 is a schematic structural diagram of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a camera 193, a display 194, and the like.

It may be understood that a structure shown in this embodiment of the present invention does not constitute a specific limitation on the electronic device 100. In some other embodiments of this application, the electronic device 100 may include more or fewer components than those shown in the figure, combine some components, split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110. Therefore, system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the electronic device 100. The charging management module 140 may further supply power to the electronic device by using the power management module 141 while charging the battery 142.

The power management module 141 is configured to connect the battery 142 and the charging management module 140 to the processor 110. The power management module 141 may receive an input of the battery 142 and/or an input of the charging management module 140, and supply power to the processor 110, the internal memory 121, the display 194, the camera 193, the wireless communications module 160, and the like. In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communications module 150, the wireless communications module 160, the modem processor, the baseband processor, and the like.

The antenna 1 and the antenna 2 are configured to: transmit and receive electromagnetic wave signals. Each antenna in the electronic device 100 may be configured to cover one or more communication bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communications module 150 may provide a wireless communication solution that includes 2G/3G/4G/5G or the like and that is applied to the electronic device 100. The mobile communications module 150 may include one or more filters, a switch, a power amplifier, a low noise amplifier (low noise amplifier, LNA), and the like. The mobile communications module 150 may receive an electromagnetic wave through the antenna 1, perform processing such as filtering and amplification on the received electromagnetic wave, and transmit the received electromagnetic wave to the modem processor for demodulation. The mobile communications module 150 may further amplify a signal modulated by the modem processor, and convert an amplified signal into an electromagnetic wave through the antenna 1 for radiation. In some embodiments, at least some functional modules of the mobile communications module 150 may be disposed in the processor 110. In some embodiments, at least some functional modules of the mobile communications module 150 and at least some modules of the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low frequency baseband signal. Then, the demodulator transmits the low-frequency baseband signal obtained through demodulation to the baseband processor for processing. The low-frequency baseband signal is processed by the baseband processor, and then transmitted to the application processor. The application processor outputs a sound signal by using an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communications module 150 or another functional module.

The wireless communications module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communications module 160 may be one or more components integrating one or more communications processor modules. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave through the antenna 2 for radiation.

In some embodiments, the antenna 1 and the mobile communications module 150 in the electronic device 100 are coupled, and the antenna 2 and the wireless communications module 160 in the electronic device 100 are coupled, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The electronic device 100 implements a display function by using the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini LED, a micro LED, a micro OLED, quantum dot light emitting diodes (quantum dot light emitting diodes, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and color temperature of a photographing scenario. In some embodiments, the ISP may be disposed in the camera 193.

The camera 193 is configured to capture a static image or a video. In some embodiments, the mobile phone 100 may include one or N cameras, where N is a positive integer greater than 1. The camera 193 may be a front-facing camera or a rear-facing camera.

The digital signal processor is configured to process a digital signal, and may process another digital signal in addition to the digital image signal. For example, when the electronic device 100 selects a frequency, the digital signal processor is configured to perform Fourier transformation and the like on frequency energy.

The video codec is configured to: compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store one or more computer programs, and the one or more computer programs include instructions. The processor 110 may run the instructions stored in the internal memory 121, so that the electronic device 100 performs an intelligent contact recommendation method provided in some embodiments of this application, various functional applications, data processing, and the like. The internal memory 121 may include a program storage region and a data storage region. The program storage region may store an operating system. The program storage region may further store one or more applications (for example, Gallery and Contacts), and the like. The data storage region may store data (for example, a photo and a contact) created during use of the electronic device 101, and the like. In addition, the internal memory 121 may include a high-speed random access memory, or may include a nonvolatile memory, for example, one or more magnetic disk storage devices, a flash memory device, or a universal flash storage (universal flash storage, UFS). In some other embodiments, the processor 110 runs the instructions stored in the internal memory 121 and/or the instructions stored in the memory disposed in the processor, so that the electronic device 100 performs an intelligent number recommendation method provided in the embodiments of this application, various functional applications, and data processing.

The electronic device 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal output, and is also configured to convert analog audio input into a digital audio signal. The audio module 170 may be further configured to: code and decode an audio signal. In some embodiments, the audio module 170 may be disposed in the processor 110, or some functional modules of the audio module 170 are disposed in the processor 110.

The speaker 170A, also referred to as a "horn", is configured to convert an electrical audio signal into a sound signal. The electronic device 100 may listen to music or answer a hands-free call by using the speaker 170A.

The receiver 170B, also referred to as an "earpiece", is configured to convert an electrical audio signal into a sound signal. When a call is answered or speech information is received by using the electronic device 100, the receiver 170B may be put close to a human ear to receive a speech.

The microphone 170C, also referred to as a "mike" or a "microphone", is configured to convert a sound signal into an electrical signal. When making a call or sending speech information, a user may make a sound by moving a human mouth close to the microphone 170C to input a sound signal to the microphone 170C. One or more microphones 170C may be disposed in the electronic device 100. In some other embodiments, two microphones 170C may be disposed in the electronic device 100, to implement a noise reduction function in addition to collecting a sound signal. In some other embodiments, three, four, or more microphones 170C may alternatively be disposed in the electronic device 100, to collect a sound signal, reduce noise, identify a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The sensor module 180 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like. This is not limited in this embodiment of this application.

Certainly, the electronic device 100 provided in this embodiment of this application may further include one or more components such as a key, a motor, an indicator, and a SIM card interface. This is not limited in this embodiment of this application.

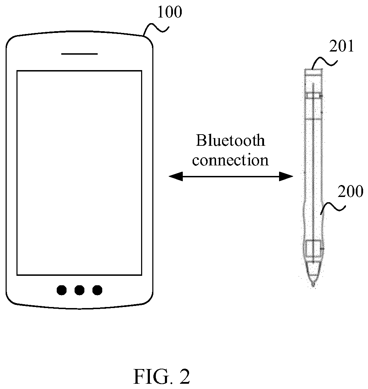

In some embodiments, as shown in FIG. 2, the electronic device 100 may further carry a stylus 200. A user may use the stylus 200 to write information such as a text in a specific region displayed on the electronic device 100. The electronic device 100 may display a moving track formed by the stylus 200 on a display. In addition, the electronic device 100 may record the moving track formed by the stylus 200 on the display, and then identify a corresponding text.

In this embodiment of this application, the stylus 200 may communicate with the electronic device 100 through wireless communication such as Bluetooth or Wi-Fi. As shown in FIG. 2, one or more buttons 201 may be disposed on the stylus 200, and the buttons 201 may be physical buttons or virtual buttons. If the stylus 200 detects that the user taps the button 201, the stylus 200 may send, through Bluetooth or the like, a key (key) value corresponding to the button 201 to the electronic device 100. The electronic device 100 may perform a corresponding operation by parsing the key value sent by the stylus 200.

For example, it is assumed that a key value corresponding to an operation of double-tapping the button 201 is 001, and the key value 001 is used to indicate to enter a comment mode. In this case, if the stylus 200 detects that the user performs a double-tap operation on the button 201, the stylus 200 may send the corresponding key value 001 to the electronic device 100. In response to the key value 001, the electronic device 100 may enter the comment mode in an interface that is being displayed, and in the comment mode, the user may use the stylus 200 to handwrite comment content in the display interface. In addition, the electronic device 100 may identify, based on the moving track of the stylus 200 in the display interface, the comment content handwritten by the user, and save the comment content in the display interface.

The stylus 200 may be specifically a resistive stylus, an electromagnetic stylus, or a capacitive stylus. This is not limited in this embodiment of this application.

A software system of the electronic device 100 may use a layered architecture, an event-driven architecture, a microkernel architecture, a micro service architecture, or a cloud architecture. In an embodiment of this application, an Android system with a layered architecture is used as an example to describe a software structure of the electronic device 100.

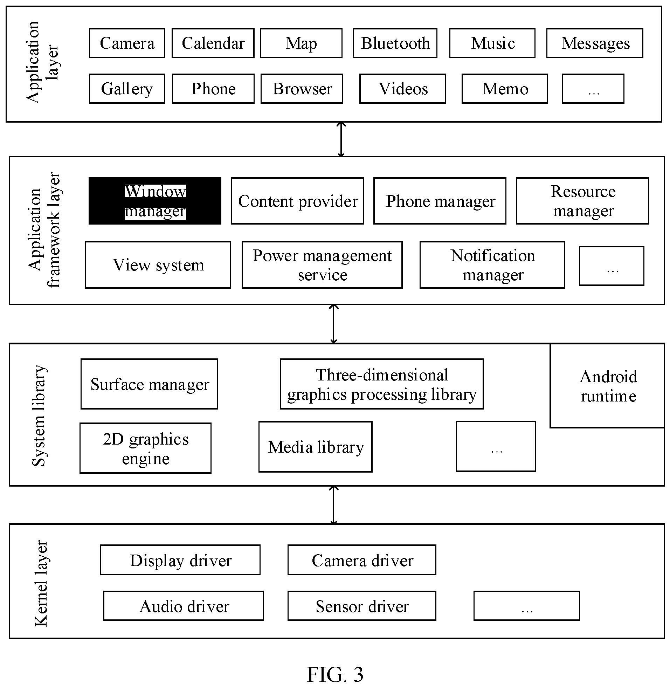

FIG. 3 is a block diagram of a software structure of the electronic device 100 according to an embodiment of this application.

In a layered architecture, software is divided into several layers, and each layer has a clear role and task. The layers communicate with each other through a software interface. In some embodiments, the Android system is divided into four layers, that is, an application layer, an application framework layer, an Android runtime (Android runtime) and system library, and a kernel layer from top to bottom.

The application layer may include a series of applications.

As shown in FIG. 3, the applications may include APPs (applications, APPs) such as Phone, Memo, Browser, Contacts, Camera, Gallery, Calendar, Map, Bluetooth, Music, Videos, and Messages. These applications may be pre-installed when the electronic device 100 is delivered from a factory, or may be downloaded and installed by a user from an application market when the user uses the electronic device 100. This is not limited in this embodiment of this application.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a resource manager, a notification manager, and the like.

The window manager is configured to manage a window program. The window manager may obtain a size of a display, determine whether there is a status bar, perform screen locking, take a screenshot, and the like. The content provider is configured to: store and obtain data and make the data accessible to the application. The data may include a video, an image, audio, calls that are made and received, a browsing history and bookmarks, a phone book, and the like. The view system includes visual controls such as a control for displaying a text and a control for displaying a picture. The view system may be configured to construct an application. A display interface may include one or more views. The resource manager provides various resources for an application, such as a localized character string, an icon, a picture, a layout file, and a video file. The notification manager enables an application to display notification information in a status bar, and may be configured to convey a notification message. The notification manager may automatically disappear after a short pause without user interaction. For example, the notification manager is configured to: notify download completion, provide a message notification, and the like. The notification manager may alternatively be a notification that appears in a top status bar of the system in a form of a graph or a scroll bar text, for example, a notification of an application running on the background or a notification that appears on the screen in a form of a dialog window. For example, text information is prompted for in the status bar, an announcement is produced, the electronic device vibrates, or an indicator light blinks.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to: manage a display subsystem and provide fusion of 2D and 3D layers for a plurality of applications. The media library supports playback and recording of a plurality of commonly used audio and video formats, static image files, and the like. The media library may support a plurality of audio and video coding formats such as MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

The Android runtime includes a core library and a virtual machine. The Android runtime is responsible for scheduling and management of the Android system.

The core library includes two parts: a function that needs to be invoked in Java language and a core library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The kernel layer is a layer between hardware and software. The kernel layer includes at least a display driver, a camera driver, an audio driver, a sensor driver, and the like. This is not limited in this embodiment of this application.

In this embodiment of this application, if the electronic device 100 receives a key value that is sent by the stylus 200 and that is used to indicate to enable a comment mode, the electronic device 100 may invoke the window manager to load, in an interface that is being displayed, a layer (which may be referred to as a comment layer) used to receive a comment. Because the comment layer is a topmost layer, a process in which the user uses the stylus 200 to enter comment content on the display is actually a process in which the stylus 200 enters the comment content at the comment layer. The window manager may send, to the processor for identification, the moving track entered by the stylus 200 and that is received at the comment layer, to identify the comment content added by the user.

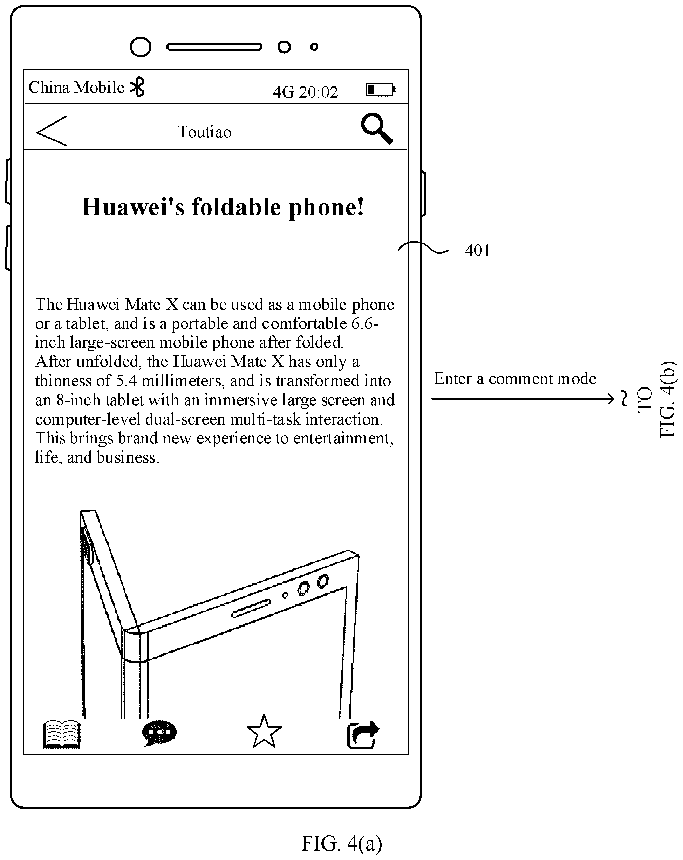

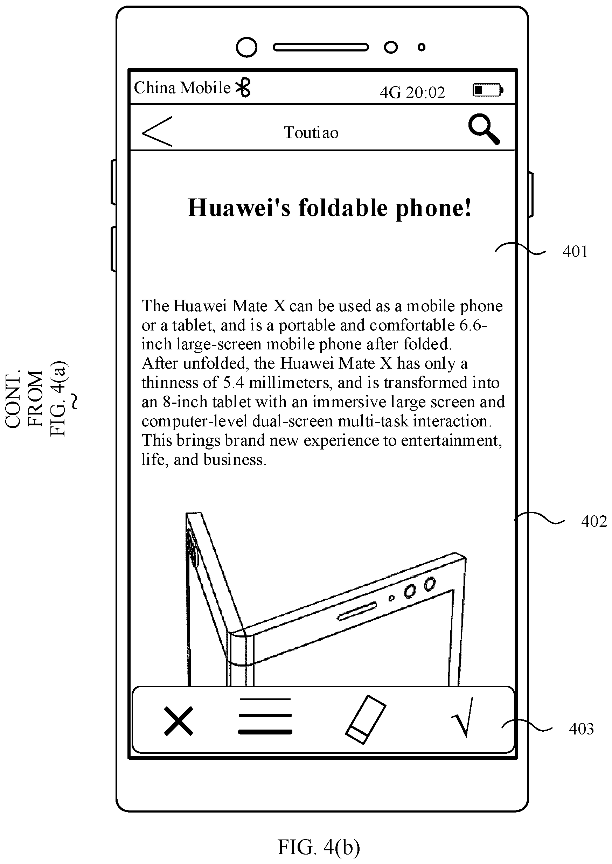

For example, the electronic device 100 runs a browser APP. As shown in FIG. 4(a), when running the browser APP, the electronic device 100 may display a display interface 401 of the browser APP on the display, where the display interface 401 includes web content that is being browsed by the user. After the electronic device 100 receives, through Bluetooth, the key value (for example, the key value is 001) sent by the stylus 200, it indicates that the user triggers the button 201 on the stylus 200 to enable the comment mode. Further, as shown in FIG. 4(b), the window manager may load a comment layer 402 in the display interface 401. The comment layer 402 may include a toolbar 403, and the toolbar 403 may include an eraser option, a line thickness option, a line color option, a save option, an exit option, and the like. These options are used to adjust the comment content in a current comment addition process.

For example, still as shown in FIG. 4(b), the window manager may set a region other than the toolbar 403 in the comment layer 402 to be transparent. In this case, after the electronic device 100 enters the comment mode, the user may further view display content (that is, display content in the browser APP) in the display interface 401 through the comment layer 402. In this way, the user may make, by using the stylus 200 in the transparent region in the comment layer 402, a comment on the display content in the display interface 401. Subsequently, the window manager may invoke a screenshot application to take a screenshot of and save an image formed after the comment layer 402 and the display interface 401 are superimposed. The image includes both the display content in the display interface 401 and the comment content added by the user to the comment layer 402 by using the stylus 200.

It can be learned that in this embodiment of this application, after the user triggers, by using the stylus 200, the electronic device 100 to enter the comment mode, the electronic device 100 may load, by using the window manager, the comment layer 402 in any display interface that is being displayed. Because the transparent region is set in the comment layer 402, the user may make, by using the stylus 200 in the transparent region in the comment layer 402, a comment on the original display content in the display interface. The comment addition method does not impose any requirement on the display interface that is being displayed, and a corresponding interface does not need to be added to an application installed in the application layer for adaptation. To be specific, the electronic device 100 may enter the handwriting comment mode in the any interface that is being displayed, to restore experience of adding a comment by the user by using paper and a pen in real life, so as to enrich an application scenario of the stylus and improve use experience of using the stylus by the user.

For ease of understanding, the following describes, in detail with reference to the accompanying drawings, a comment addition method provided in an embodiment of this application. In the following embodiments, an example in which a mobile phone is used as the electronic device 100 is used for description.

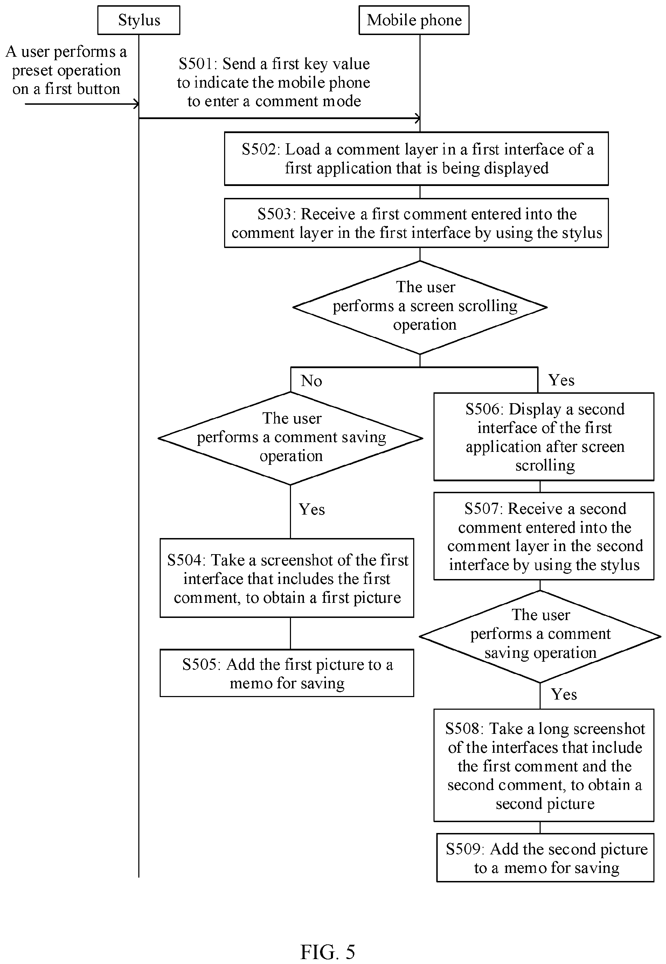

FIG. 5 is a schematic flowchart of a comment addition method according to an embodiment of this application. As shown in FIG. 5, the comment addition method may include the following steps.

S501: In response to a preset operation performed by a user on a first button on a stylus, the stylus sends a first key value to a mobile phone, where the first key value is used to indicate the mobile phone to enter a comment mode.

The stylus 200 shown in FIG. 2 is still used as an example. The stylus 200 may establish a Bluetooth connection to the mobile phone. The button 201 on the stylus 200 may be the first button. If the stylus 200 detects that the user performs a preset operation (for example, a double-tap operation, a single-tap operation, or a touch and hold operation) on the button 201, it indicates that the user expects to enable the comment mode of the mobile phone, and uses the stylus to add a comment in a display interface of the mobile phone.

Different buttons and specific key values corresponding to different operations are preset in the stylus 200. For example, a key value corresponding to an operation of single-tapping the button 201 is 010, and a key value corresponding to an operation of double-tapping the button 201 is 001. In this case, after detecting that the user double-taps the button 201, the stylus 200 may send the corresponding key value 001 (that is, the first key value) to the mobile phone based on the established Bluetooth connection. The first key value is used to indicate the mobile phone to enter the comment mode of the stylus. After receiving the first key value, the mobile phone may continue to perform step S502 to enter the comment mode, so that the user can make, in the comment mode, a comment on content in the display interface by using the stylus.

S502: In response to the first key value sent by the stylus, the mobile phone loads a comment layer in a first interface that is of a first application and that is being displayed, where the comment layer includes a first toolbar and a transparent region.

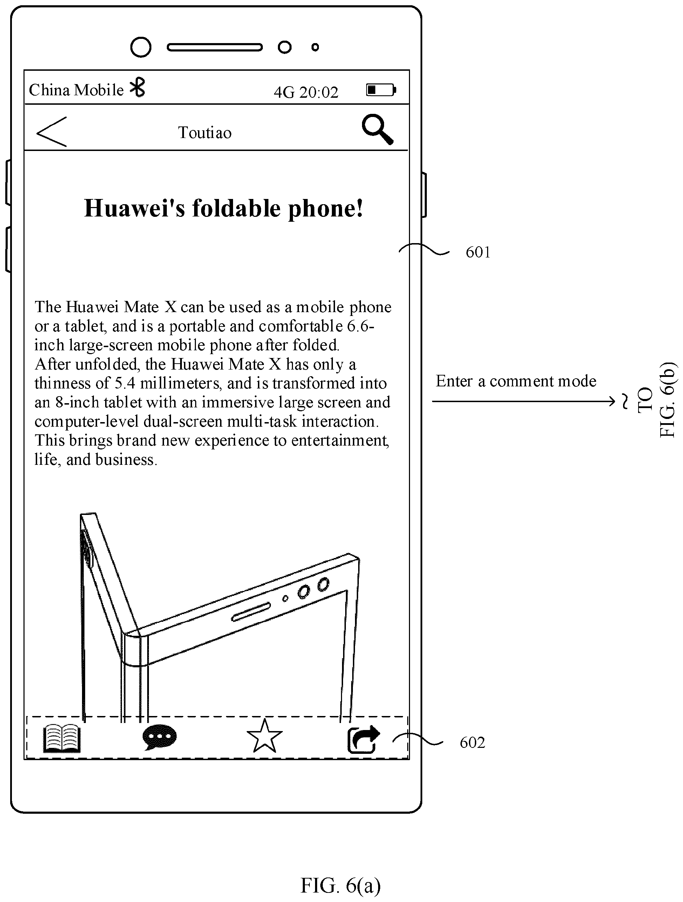

For example, as shown in FIG. 6(a), when receiving the first key value sent by the stylus, the mobile phone is displaying a first interface 601 of a browser APP. In this case, the first interface 601 is a topmost layer of an entire display image on a display. The first interface 601 may include a toolbar 602 of the browser APP, and one or more options such as Share, Comments, and Favorites may be set in the toolbar 602. After receiving the first key value, the mobile phone may parse the first key value, to identify that operation intent of the user at this time is to enable the comment mode. To be specific, the user triggers the first button on the stylus, so that the mobile phone can quickly enter the comment mode, to help the user make a comment.

In some other embodiments, the user may alternatively trigger, in another manner, the mobile phone to enter the comment mode. For example, if the mobile phone detects that the user performs a preset operation in the first interface 601 that is being displayed, the mobile phone may enter the comment mode in response to the preset operation. For example, the preset operation may be an operation such as a press operation, a tap operation, or a two-finger slide operation. This is not limited in this embodiment of this application.

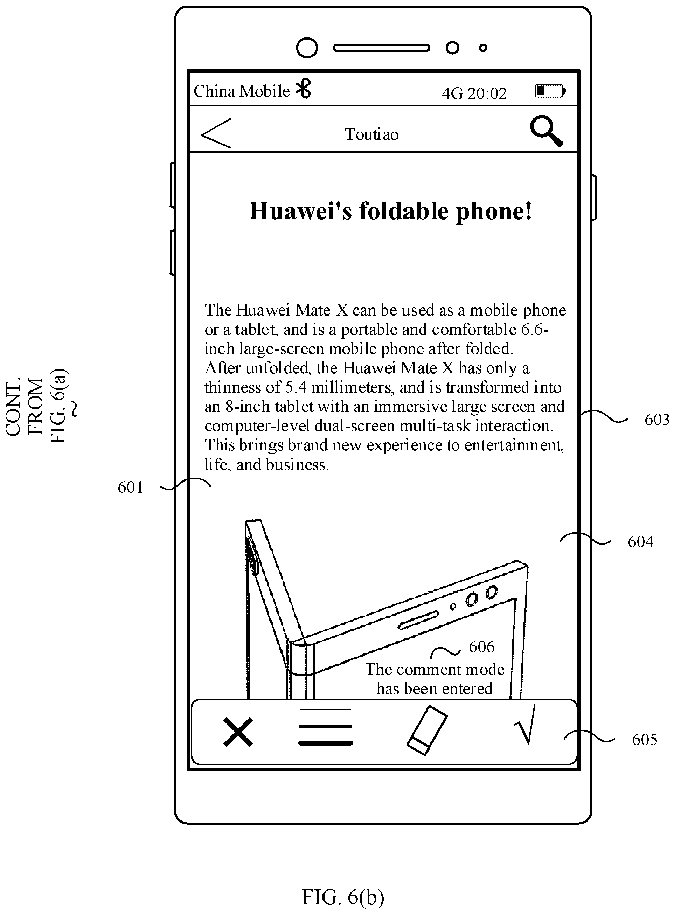

After the mobile phone enters the comment mode, as shown in FIG. 6(b), the mobile phone may load a new layer (that is, a comment layer 603) in the first interface 601. In this case, the comment layer 603 is a topmost layer of the entire display image on the display. The comment layer 603 may include a transparent region 604 and a first toolbar 605. A function option used to adjust comment content is set in the first toolbar 605. For example, the first toolbar 605 may include one or more function options such as exiting a comment mode, saving a comment, adjusting a line thickness, adjusting a line color, and an eraser.

For example, the mobile phone may superimpose the first toolbar 605 in the comment layer 603 on the toolbar 602 that is of the browser APP and that is in the first interface 601. In this case, although the comment layer 603 is the topmost layer, the first interface 601 displayed in the browser APP before the comment mode is entered may be displayed through the transparent region 604 in the comment layer 603. Subsequently, the user may make, by using the stylus at the comment layer 603 that is the top layer, a comment on content in the first interface 601. In this way, the running browser APP is not affected, and a function of adding a comment to the current display interface in real time can also be implemented.

For example, still as shown in FIG. 6(b), after entering the comment mode, the mobile phone may further display a prompt 606 to notify the user that the mobile phone has entered the comment mode currently. For another example, the mobile phone may further prompt, in a manner such as a text, a speech, or an animation, the user to add a comment to the transparent region 604 in the comment layer 603 by using the stylus.

S503: The mobile phone receives a first comment entered by the user into the comment layer in the first interface by using the stylus.

An example in which the comment layer 603 is superimposed on the first interface 601 is still used. After the mobile phone enters the comment mode, the user may view the display content in the first interface 601 of the browser APP through the transparent region 604 in the comment layer 603. Further, the user may add a comment to corresponding display content by using the stylus. The comment may include one or more pieces of content such as a text, a number, or a pattern.

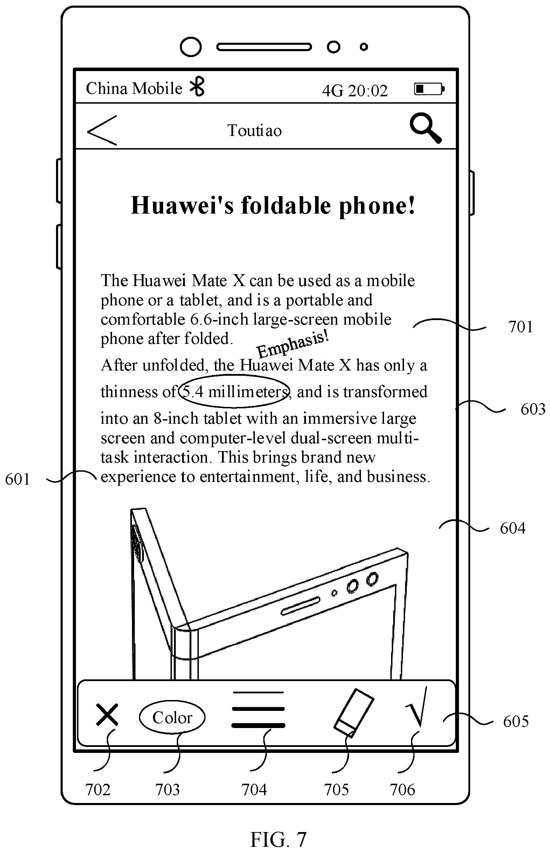

As shown in FIG. 7, the user circles display content in the first interface 601 by using the stylus, and marks the circled display content as "emphasis". In this case, a pattern formed by circling the content by the user and the text "emphasis" are a currently added first comment 701. In this case, because a layer that is actually a top layer on the display is the comment layer 603, the mobile phone actually receives and records, in the transparent region 604 in the comment layer 603, the first comment 701 that is currently entered by the user. In this case, the mobile phone does not modify the display content in the first interface 601 of the browser APP. It should be noted that the user may add one or more comments to the comment layer 603 corresponding to the first interface 601. This is not limited in this embodiment of this application.

In some embodiments, after receiving an input event in the comment mode, the mobile phone may first determine whether the input event is a comment event for the comment layer 603. For example, if the input event is an input event formed by the stylus on the display, the mobile phone may determine that the input event is the comment event for the comment layer 603. In this case, the mobile phone may display and record current input content of the user at the comment layer 603, to form the first comment. If the input event is an input event formed by a finger of the user on the display (for example, a slide operation of the finger of the user), it indicates that the user probably expects to perform an operation on the first interface 601 of the browser APP. Therefore, the mobile phone may determine that the current input event is not the comment event for the comment layer 603, and in this case, the mobile phone may continue to perform steps S506 to S509.

For example, the mobile phone may determine, based on a size of a contact area in the input event, whether the input event is the input event formed by the stylus on the display or the input event formed by the finger of the user on the display. A contact area between the finger of the user and the display is relatively large when the finger of the user slides on the display, and a contact area between the stylus and the display is relatively small when the stylus slides on the display. Therefore, if the mobile phone detects that a contact area of a contact in the current input event is less than a preset value, the mobile phone may determine that the input event is the input event formed by the stylus on the display; or if the mobile phone detects that a contact area of a contact in the current input event is greater than a preset value, the mobile phone may determine that the input event is the input event formed by the finger of the user on the display.

For another example, an electrical signal generated by the finger on the display is different from an electrical signal generated by the stylus on the display. For example, strength of a capacitive signal generated after the finger contacts the display falls within a first threshold range, and strength of a capacitive signal generated after the stylus contacts the display falls within a second threshold range. In this case, the mobile phone may determine, based on strength of an electrical signal generated by the input event on the display, whether the input event is the input event formed by the stylus on the display or the input event formed by the finger of the user on the display.

In this embodiment of this application, after the mobile phone superimposes the comment layer 603 on the first interface 601, the browser APP may still dynamically update the content in the first interface 601. For example, when the first interface 601 includes a video or an animation, the mobile phone may normally play the video or the animation in the first interface 601. To be specific, a process in which the mobile phone receives, at the comment layer 603, the comment added by the user does not conflict with a process in which the mobile phone plays the video or the animation in the first interface 601.

For another example, after the mobile phone superimposes the comment layer 603 on the first interface 601, the mobile phone may further receive an editing operation performed by the user on the first interface 601. For example, the editing operation may be a copy-and-paste operation. After detecting that the finger of the user touches and holds the display, the mobile phone may determine that the touch and hold operation is an operation for the first interface 601 of the browser APP, and therefore the mobile phone may display an editing menu used to copy a text, or the like. For another example, when a play button is set in the first interface 601, if the mobile phone detects that the user taps the play button, the mobile phone may play a corresponding video or audio file in the first interface 601.

To be specific, when the user adds a comment to the first interface 601 by using the stylus, normal running of the first interface 601 of the browser APP is not affected. After the mobile phone receives a touch event of the finger of the user, the browser APP in the mobile phone may normally edit or update the content in the first interface 601 in response to the touch event. After the mobile phone receives a touch event of the stylus, the mobile phone may display a moving track of the stylus at the comment layer 603.

Certainly, if the user performs an interface jumping operation in the first interface 601, for example, an operation of tapping a back button by the user or an operation of tapping a web link by the user, when jumping to a new interface, the mobile phone may further delete the comment layer 603 superimposed on the first interface 601 and exit the comment mode. Alternatively, the mobile phone may continue to retain the comment layer 603 when jumping to a new interface. In this case, after the mobile phone jumps to the new interface, the comment layer 603 is superimposed on the new interface to which the mobile phone jumps, and therefore the user may continue to add a comment to the new interface.

In addition, if the current input event is performed on the first toolbar 605 in the comment layer 603, regardless of whether the input event is formed by the user by using the stylus or formed by the user by using the finger, the mobile phone may determine that the input event is the comment event for the comment layer 603.

Still as shown in FIG. 7, after the mobile phone enters the comment mode, if the mobile phone detects that the user selects an exit option 702 in the first toolbar 605, the mobile phone may delete the comment layer 603 that is the top layer. In this case, the first comment already recorded at the comment layer 603 is also deleted, and the first interface 601 of the browser APP is restored to a layer that is a topmost layer. If the mobile phone detects that the user selects a line color adjustment option 703 in the first toolbar 605, the mobile phone may display a plurality of optional line colors for the user to select, and a color selected by the user is used as a color displayed when the stylus subsequently moves at the comment layer 603. If the mobile phone detects that the user selects a line thickness adjustment option 704 in the first toolbar 605, the mobile phone may display a plurality of optional lines representing thickness for the user to select, and a line representing thickness that is selected by the user is used as a thickness degree displayed when the stylus subsequently moves at the comment layer 603. If the mobile phone detects that the user selects an eraser option 705 in the first toolbar 605, the mobile phone may erase a line subsequently selected by the stylus at the comment layer 603. If the mobile phone detects that the user selects a save option 706 in the first toolbar 605, the mobile phone may perform steps S504 and S505 to save a currently added comment. Certainly, the first toolbar 605 may further include options such as Previous, Next, and Add a special effect. This is not limited in this embodiment of this application.

For example, the user may select a corresponding option in the first toolbar 605 by using the stylus, or the user may select a corresponding option in the first toolbar 605 by using the finger. This is not limited in this embodiment of this application.

S504: If the mobile phone detects an operation of saving the current comment by the user, the mobile phone takes a screenshot of the first interface that includes the first comment, to obtain a first picture.

If the mobile phone detects that the user selects the save option 706 in the first toolbar 605, it indicates that the user performs the operation of saving the current comment. In this case, the mobile phone may invoke a screenshot application to perform a screenshot operation on an interface that is being displayed on the display. The first picture obtained through the current screenshot operation includes both the first interface 601 of the browser APP and the first comment added by the user at the comment layer 603 to related content in the first interface 601.

Alternatively, after detecting that the user adds the first comment to the first interface 601, the mobile phone may automatically save content in the first interface 601 and content in the first comment. For example, the mobile phone may automatically take a screenshot of the first interface 601 that includes the first comment.

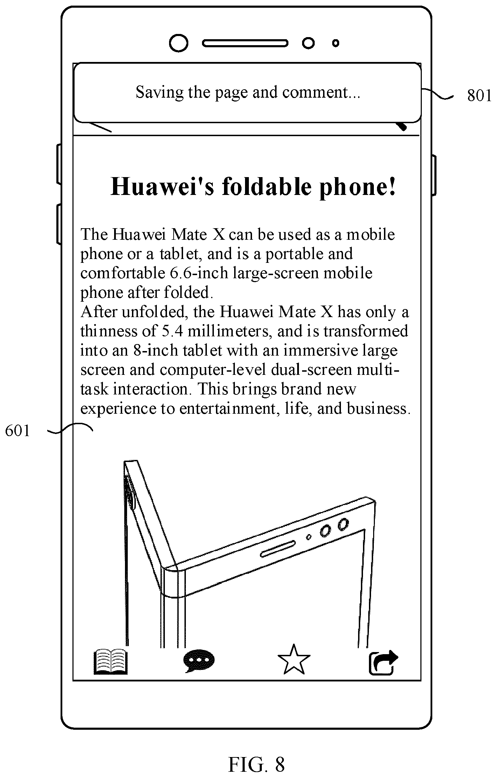

In addition, as shown in FIG. 8, when taking a screenshot of the first interface 601 that includes the first comment, the mobile phone may display a prompt 801 indicating that a comment is being saved, to prompt the user that the currently added comment is being saved. In addition, the mobile phone may further delete the comment layer 603 superimposed on the first interface 601, and exit the comment mode.

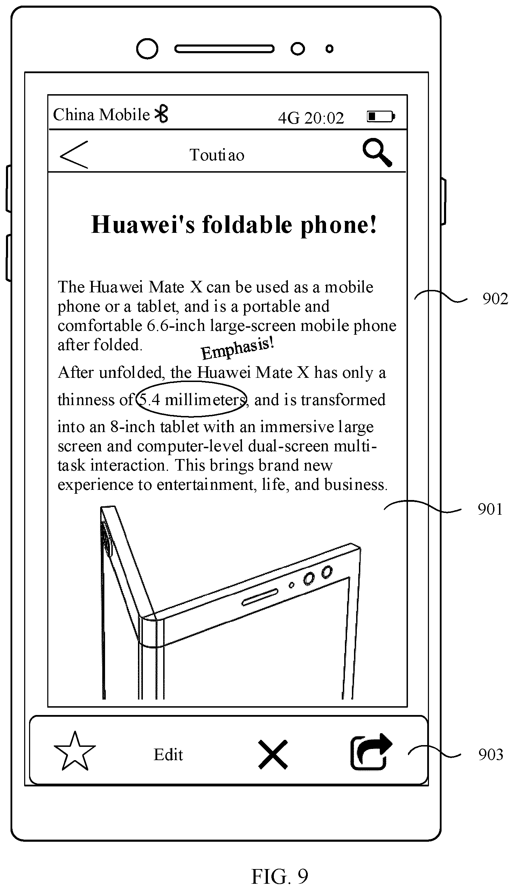

In some embodiments, as shown in FIG. 9, after obtaining, by performing a screenshot operation, a first picture 901 that includes the first comment, the mobile phone may further display a preview interface 902 of the first picture 901. The preview interface 902 may include the first picture 901 and a second toolbar 903. One or more options such as Share, Star, Edit, and Delete are set in the second toolbar 903. The user may perform an operation such as picture sharing, or picture deletion on the first picture 901 by using these options in the second toolbar 903. For example, if the mobile phone does not receive any input operation of the user within a preset time after displaying the preview interface 902, the mobile phone may automatically hide the preview interface 902, and redisplay the first interface 601 of the browser APP, to avoid disturbance caused by the preview interface 902 to the user in using the browser APP.

S505: The mobile phone adds the first picture to a memo for saving.

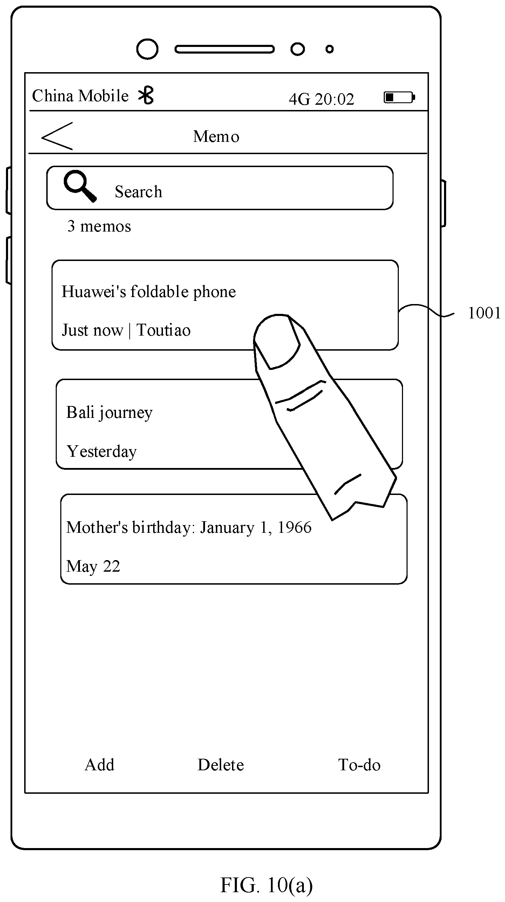

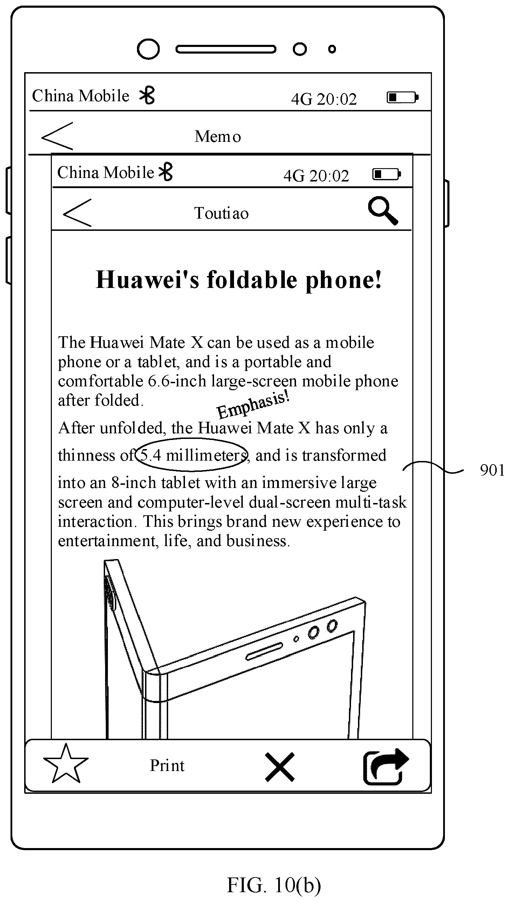

After obtaining, by performing the screenshot operation, the first picture 901 that includes the first comment, the mobile phone may automatically add the first picture 901 as a memo to a memo APP. In this case, as shown in FIG. 10(a), the user may open the memo APP to find a memo 1001 that includes the first picture 901. If the mobile phone detects that the user opens the memo 1001, as shown in FIG. 10(b), the mobile phone may display, in the memo APP, the first picture 901 that includes the first comment.

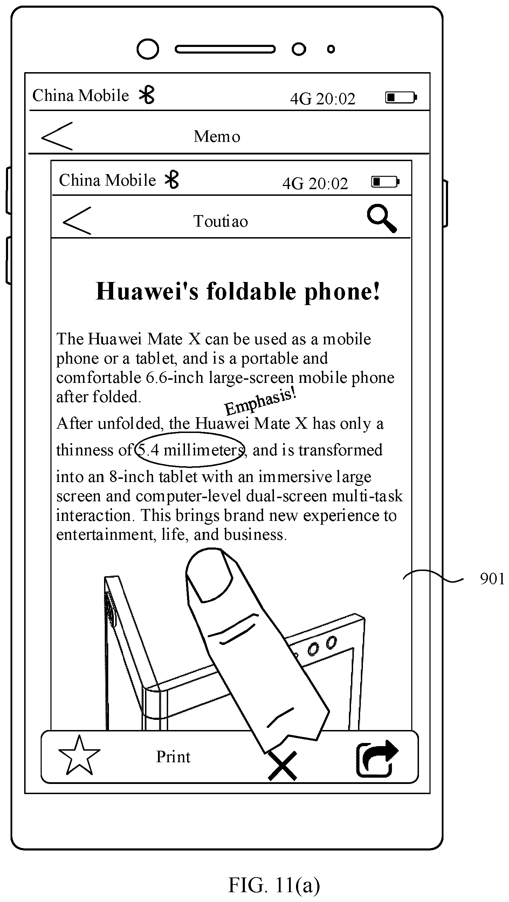

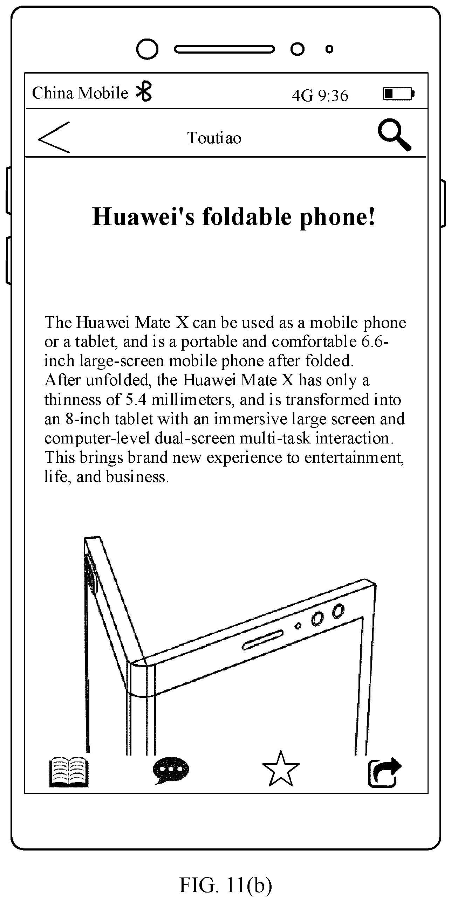

In some embodiments, when obtaining the first picture 901 by performing the screenshot operation, the mobile phone may further obtain a URL (uniform resource locator, uniform resource locator) address when the browser APP displays the first interface 601. In this case, when saving the first picture 901 in the memo, the mobile phone may also save the URL address of the first interface 601. As shown in FIG. 11(a), when the mobile phone displays the first picture 901 in the memo APP, if the mobile phone detects that the user taps the first picture 901, as shown in FIG. 11(b), the mobile phone may reopen the first interface 601 of the browser APP based on the URL address of the first interface 601. To be specific, the mobile phone may establish, in the memo APP, an association relationship between a saved comment and a page on which the comment is made, and when viewing the saved comment, the user may link to the page on which the comment is created for review.

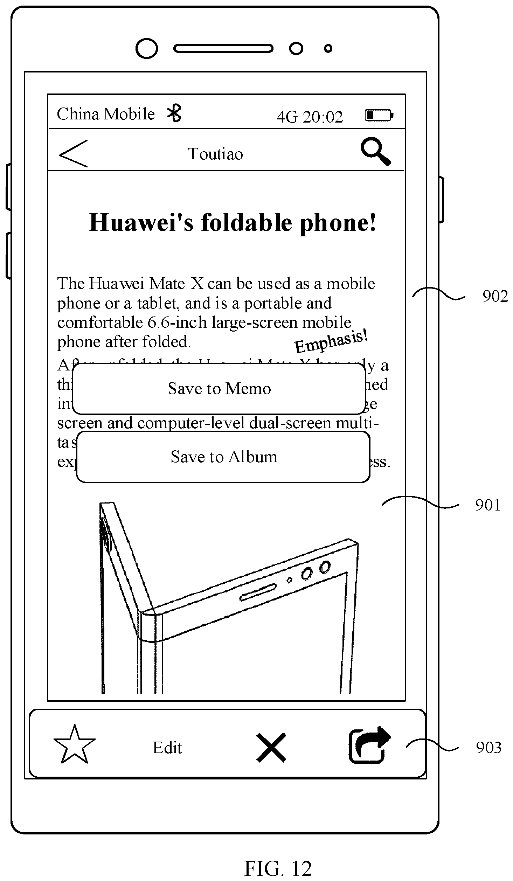

Alternatively, as shown in FIG. 12, when displaying the preview interface 902 of the first picture 901, the mobile phone may prompt the user to save the first picture 901 in the memo APP or a gallery APP. If the user chooses to save the currently added comment in the memo APP, as shown in FIG. 10(a), the mobile phone may add the first picture 901 as a memo to the memo APP. Correspondingly, if the user chooses to save the currently added comment in the gallery APP, the mobile phone may save the first picture 901 in the gallery APP, and therefore the user may find, in the gallery APP, the picture including the currently added comment. Certainly, the mobile phone may alternatively save the first picture 901 in both the memo APP and the gallery APP, or the mobile phone may save the first picture 901 in a preset application (for example, a global favorites APP) of the mobile phone. This is not limited in this embodiment of this application.

In some embodiments, when receiving, at the comment layer 603, the first comment added by the user, the mobile phone may automatically identify specific text information in the first comment based on a moving track of the stylus. For example, the first comment includes the word "emphasis". Alternatively, after obtaining the first picture 901, the mobile phone may automatically extract text information from the first picture 901. For example, the mobile phone may extract, by using an OCR (optical character recognition, optical character recognition) technology, web content recorded in the first picture 901. For another example, when detecting that the user performs an operation of saving a comment, the mobile phone may obtain a URL address of the first interface 601 currently displayed in the browser APP, and download web content in the first interface 601 from the URL address. In this case, the mobile phone may save, in the memo 1001, both the first picture 901 obtained through the screenshot and the text information in the first picture 901.

In this way, when creating the memo 1001, the mobile phone may use related text information in the first picture 901 as a title of the memo 1001. In addition, when searching a plurality of memos in the memo APP for the memo 1001, the user may enter, in a search box 1002, a related keyword in the first picture 901. The mobile phone may retrieve, based on the keyword entered by the user, the memo 1001 related to the keyword, and the mobile phone may prompt the user with one or more memos, as one or more search results, that include the keyword, so that the user can quickly find the saved comment content in the memo APP.

In some other embodiments, in addition to saving, in the memo application in a form of a screenshot, the comment added by the user, the mobile phone may further save, in another format, the comment currently added by the user.

For example, as shown in Table 1, after the mobile phone detects that the user selects the save option 706 in the first toolbar 605, the mobile phone may obtain a URL address of the currently displayed first interface 601 of the browser APP, and the mobile phone may obtain specific display content in the first interface 601 based on the URL address. In addition, the mobile phone may further record information such as a specific comment location of the first comment 701 in the first interface 601, specific comment content of the first comment 701, and an addition time of the current comment. Further, based on the related information that is of the first comment 701 and that is recorded in Table 1, the mobile phone may generate a corresponding file in a format such as a picture, a text, PDF, or Word, to save the currently added first comment 701 in the file. Subsequently, the user may find, in a related application, specific content on which the user makes a comment in the first interface 601.

**Table 1**

| Application interface | Comment location | Comment content | Addition time | ... |
|---|---|---|---|---|
| URL address of a first interface 601 | First line of the second paragraph | "Emphasis" | 2019/3/8 | ... |
| ... | ... | ... | ... | ... |

In some other embodiments, the first interface 601 of the browser APP is still used as an example. After entering the first comment into the first interface 601 by using the stylus, the user may further scroll the currently displayed first interface 601, and continue to add another comment to a new display interface. To be specific, after the mobile phone performs step S503, if the mobile phone receives a screen scrolling operation of the user, the mobile phone may continue to perform steps S506 to S509 to add a second comment to a second interface.

S506: In response to the screen scrolling operation entered by the user, the mobile phone displays the second interface of the first application after screen scrolling.

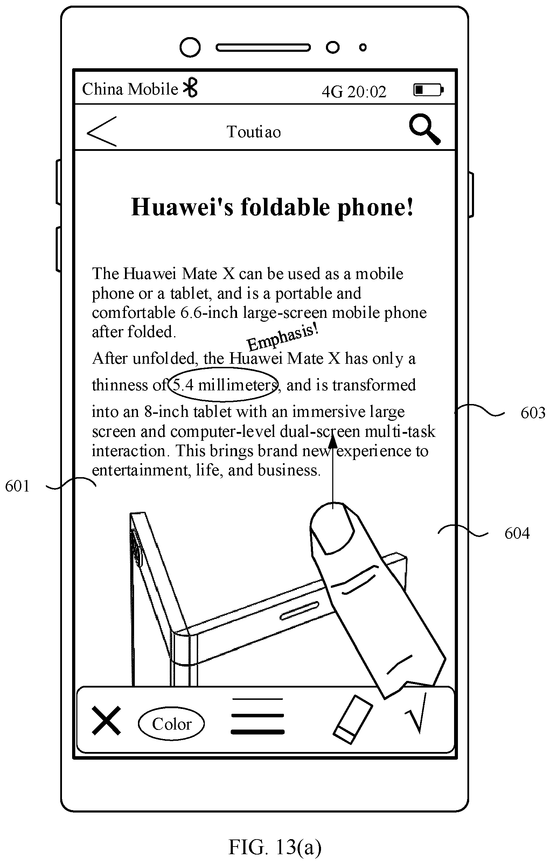

An example in which the first application is the browser APP is still used. As shown in FIG. 13(a), in the comment mode, the comment layer 603 is superimposed on the first interface 601 of the browser APP. The user may make, in the transparent region 604 in the comment layer 603, a comment on the content in the first interface 601. If the user expects to continue to browse subsequent content in the first interface 601 of the browser APP, the user may enter a screen scrolling operation into the display. For example, the operation may be a slide operation performed by a finger of the user on the display.

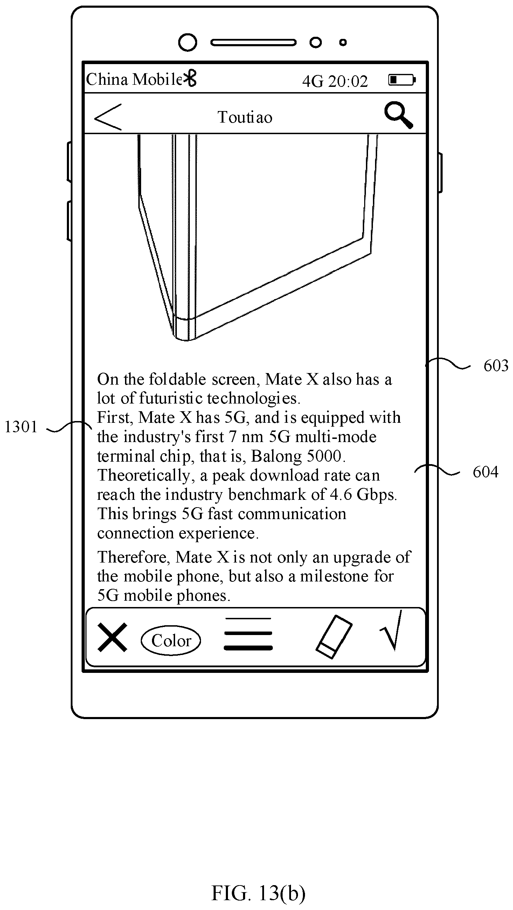

After the mobile phone detects the slide operation performed by the finger of the user on the display, because an electrical signal generated by the finger on the display is different from an electrical signal generated by the stylus on the display, after determining that the current user operation is the slide operation of the finger of the user, the mobile phone may determine that the slide operation is an operation for the browser APP, instead of an operation for the comment layer 603. In this case, in response to the slide operation of the user, the display of the mobile phone may report a current slide event to the browser APP running at the application layer. As shown in FIG. 13(b), the browser APP may display a second interface 1301 on the display through screen scrolling. Display content in the second interface 1301 may be partially the same as the display content in the first interface 601.

In addition, when the mobile phone displays the second interface 1301 through screen scrolling, because the mobile phone has not exited the comment mode, the mobile phone may synchronously scroll the transparent region 604 in the comment layer 603. In this case, the first comment originally recorded in the transparent region 604 corresponding to the first interface 601 is also hidden along with scrolling of the transparent region 604. As shown in FIG. 13(b), the comment layer 603 superimposed on the second interface 1301 of the browser APP does not include the first comment.

S507: The mobile phone receives a second comment entered by the user into the comment layer in the second interface by using the stylus.

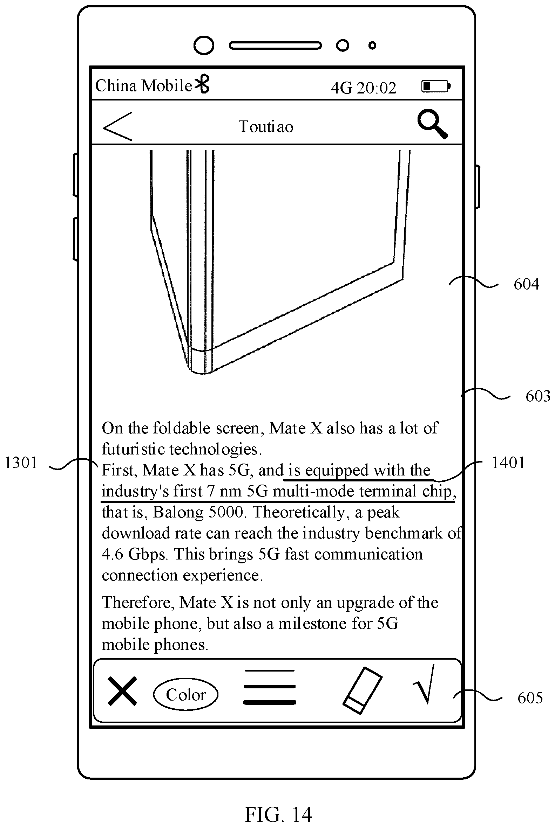

As shown in FIG. 14, after the mobile phone displays the second interface 1301 of the browser APP, the user may view the display content in the second interface 1301 through a new transparent region 604 in the comment layer 603. Further, the user may add a second comment 1401 to corresponding display content by using the stylus.

Similar to step S503, in this case, because a layer that is actually a top layer on the display is the comment layer 603, the mobile phone actually receives and records, in the transparent region 604 in the comment layer 603, the second comment 1401 that is currently entered by the user. In this case, the mobile phone does not modify the display content in the second interface 1301 of the browser APP.

Subsequently, if the user expects to continue to browse display content in interfaces before and after the second interface 1301 of the browser APP, the user may continue to enter a screen scrolling operation, to trigger the mobile phone to cyclically perform steps S506 and S507, so that the mobile phone can add comments to content in different display interfaces in the comment mode.

Correspondingly, after the user enters the first comment into the first interface 601 and enters the second comment into the second interface 1301, if the user expects to exit the comment mode and save the two currently added comments, the user may tap the save option 706 in the first toolbar 605 in the comment layer 603. In this case, the mobile phone may perform steps S508 and S509 to save a plurality of comments currently added by the user in different display interfaces.

S508: If the mobile phone detects an operation of saving the current comment by the user, the mobile phone takes a long screenshot of the interfaces that include the first comment and the second comment, to obtain a second picture.

If the mobile phone detects that the user selects the save option 706 in the first toolbar 605, the mobile phone may automatically perform a long screenshot operation (which may also be referred to as a screen recording operation) on the first interface 601 that includes the first comment and the second interface 1301 that includes the second comment. In this way, the second picture obtained after the mobile phone takes the long screenshot not only includes the display content in the first interface 601 of the browser APP and the display content in the second interface 1301 of the browser APP, but also includes the first comment added by the user to the first interface 601 and the second comment added by the user to the second interface 1301.

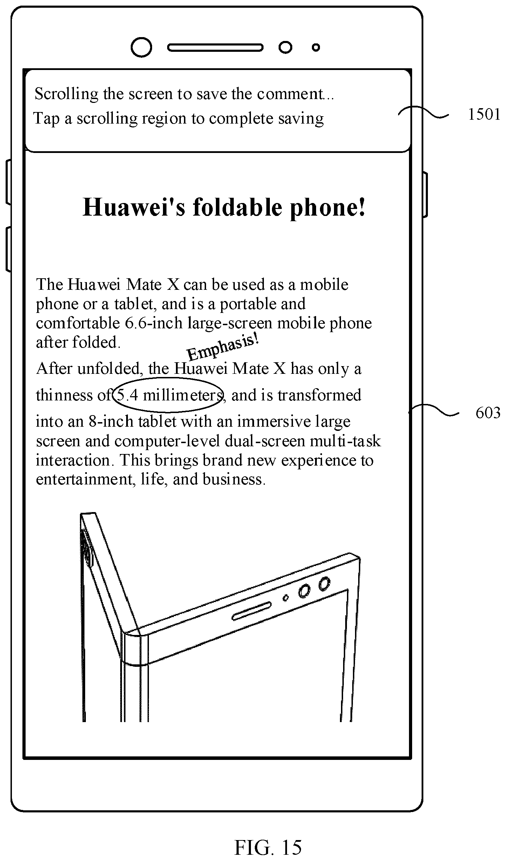

For example, after detecting that the user selects the save option in the first toolbar 605, as shown in FIG. 15, when performing a long screenshot operation, the mobile phone may display a prompt 1501 to prompt the user that the currently added comment is being saved. In addition, the mobile phone may start to scroll to display and save an article currently opened by the browser APP and comments added by the user at different locations of the article. If the mobile phone detects, when the mobile phone scrolls to a specific location, that the user performs a screenshot stop operation (for example, a tap operation), the mobile phone may stop taking a screenshot, delete the comment layer 603 superimposed on the interface of the browser APP, and exit the comment mode. In this case, the long screenshot saved by the mobile phone before the tap operation is received is the second picture that carries the current comment.

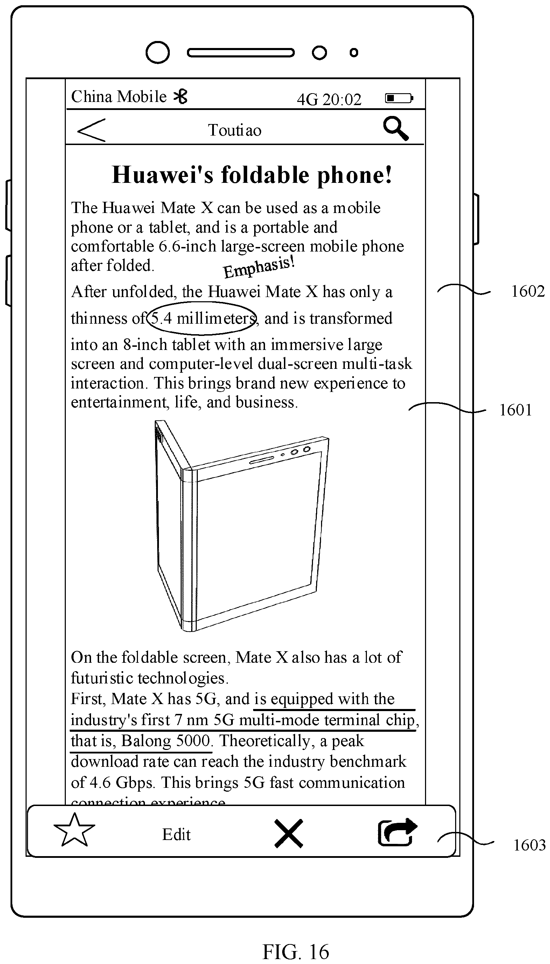

As shown in FIG. 16, after obtaining a second picture 1601 that includes the first comment and the second comment, the mobile phone may further display a preview interface 1602 of the second picture 1601. Similar to the preview interface 902 of the first picture 901 shown in FIG. 9, a third toolbar 1603 is set in the preview interface 1602 of the second picture 1601. One or more options such as Share, Edit, and Delete are also set in the third toolbar 1603. This is not limited in this embodiment of this application.

S509: The mobile phone adds the second picture to the memo for saving.

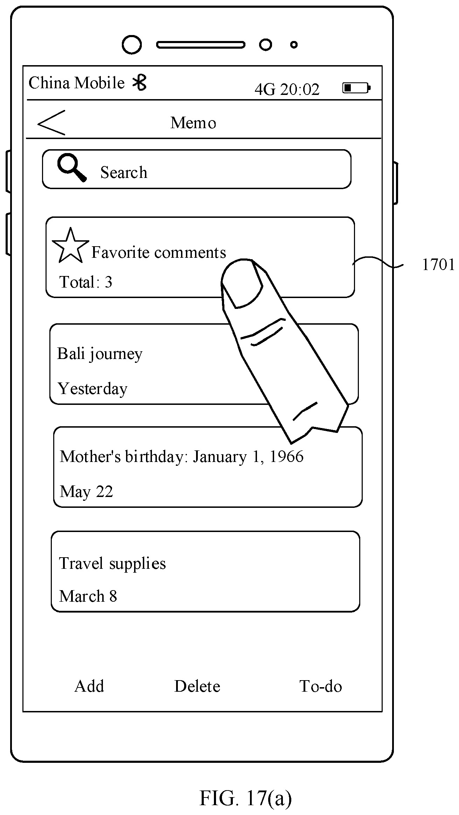

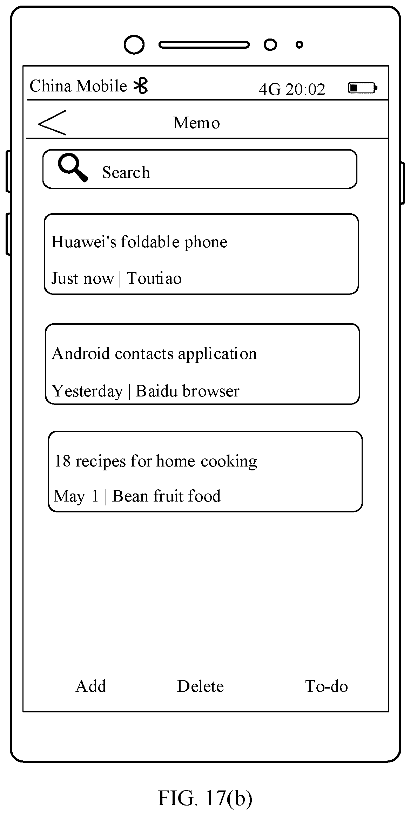

Similar to step 505, in this step, after obtaining, by performing the screenshot operation, the second picture 1601 that includes the first comment and the second comment, the mobile phone may add the second picture 1601 as a memo to a memo APP. For example, as shown in FIG. 17(a), the mobile phone may set, in the memo APP, a folder 1701 used to add a comment to favorites. After the user opens the folder 1701, as shown in FIG. 17(b), the mobile phone may display a plurality of memos in the memo APP, where each memo records one comment process of the user in a form of a picture.

For example, the mobile phone may further set level-2 directories in the folder 1701 to save different types of comments. For example, the mobile phone may set, in the folder 1701 at a granularity of each month, a folder 1 corresponding to January, a folder 2 corresponding to February, and the like. The folder 1 stores each comment saved by the mobile phone in January, and the folder 2 stores each comment saved by the mobile phone in February. For another example, the mobile phone may set, in the folder 1701 at a granularity of an application, a folder A corresponding to a browser APP, a folder B corresponding to an e-book APP, and the like. The folder A stores each comment saved by the user in the browser APP, and the folder B stores each comment saved by the user in the e-book APP.

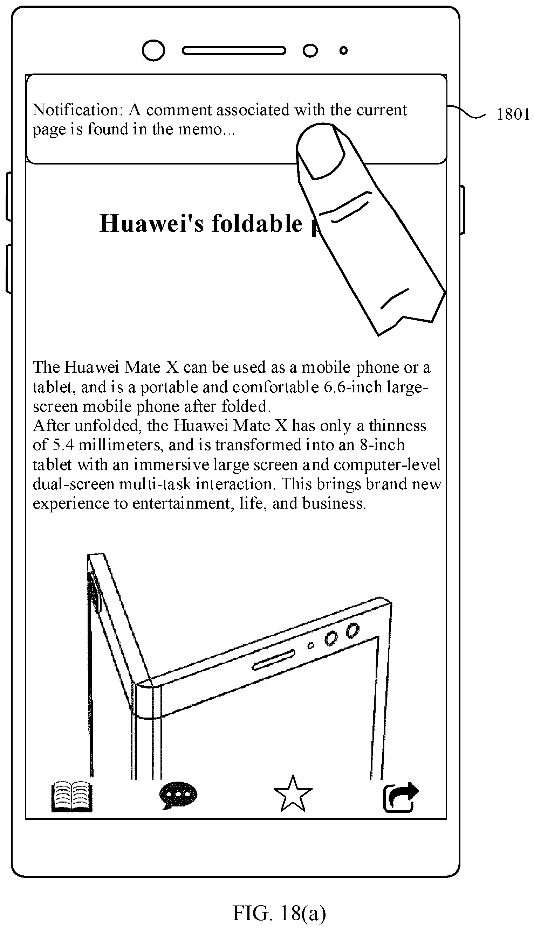

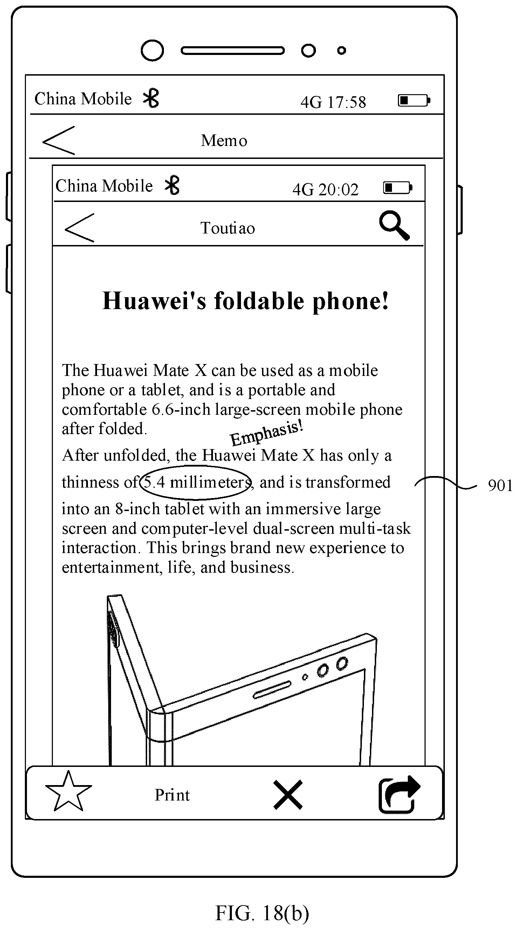

In some embodiments, when adding the second picture 1601 to the memo APP, the mobile phone may further record a URL address associated with the second picture 1601, that is, display a URL address of the first interface (or the second interface) in the browser APP. In this way, when the user opens the browser APP again to browse the first interface (or the second interface), the mobile phone may detect that the URL address currently opened in the browser APP is the same as the URL address recorded by the mobile phone. In this case, as shown in FIG. 18(a), when displaying the first interface (or the second interface) of the browser APP again, the mobile phone may display a notification message 1801, and prompt, in the notification message 1801, the user that a comment associated with the current display interface is found. If the mobile phone detects that the user opens the notification message 1801, as shown in FIG. 18(b), the mobile phone may automatically open the first picture 901 (or the second picture 1601) that carries the comment content in the memo APP. In this way, when the user uses the browser APP, the mobile phone may automatically prompt the user with the comment associated with the currently browsed content, so that the user can view, in a timely manner, the comment previously made on the related browsed content.

Alternatively, the user may manually trigger the mobile phone to find out whether a comment associated with the current display interface is stored. For example, when the mobile phone displays the first interface (or the second interface) of the browser APP again, if the user expects to search for the comment content associated with the current interface, the user may perform a preset gesture (for example, a press operation or a knuckle tap operation) in the current interface. Further, in response to the gesture performed by the user in the current interface, the mobile phone may obtain a URL address of the current interface, and find out, in the memo APP, whether there is a specific memo that records the URL address. If the mobile phone finds the URL address in the memo of the second picture 1601, it indicates that the user has previously added the comment to the same display interface, and saves the added comment in the second picture 1601. In this case, as shown in FIG. 18(a), the mobile phone may display a notification message 1801 in the first interface of the browser APP, to prompt the user that a comment associated with the current display interface is found.

Alternatively, when the mobile phone displays the first interface (or the second interface) of the browser APP again, the mobile phone may determine, based on the URL address that is of the comment and that is stored in Table 1, that a first interface currently opened by the user is the same as the first interface in which the first comment is located. Further, the mobile phone may reproduce, in the currently displayed first interface based on the specific comment location and the specific comment content of the first comment that are recorded in Table 1, the first comment previously added by the user. In this way, when the user browses, again when using each application, the interface to which the comment has been previously added, the mobile phone may quickly reproduce the specific content of the previously added comment in the current interface, to remind the user of the current interface and the corresponding comment content, and improve use experience of the user.

It should be noted that in the foregoing embodiment, descriptions are provided by using an example in which the user adds the comment to the first interface (or the second interface) by using the stylus. It may be understood that the user may alternatively add one or more comments to the first interface (or the second interface) in another manner, for example, by using a finger.

For example, if the mobile phone enters the comment mode when displaying the first interface, the mobile phone may load the comment layer in the first interface. In addition, the mobile phone may set a handwriting button and a non-handwriting button in the toolbar in the comment layer. If the mobile phone detects that the user selects the handwriting button, the mobile phone may display a touch track of the finger of the user in the first interface in response to a touch event of the finger of the user. In this case, the touch event is a comment event for the comment layer. If the mobile phone detects that the user selects the non-handwriting button, when the mobile phone detects a touch event entered by the finger of the user, it indicates that the touch event is a touch event for the first interface. In this case, the mobile phone may update the content in the first interface in response to the touch event. For example, the mobile phone may perform an operation such as playing a video, copying a text, or turning a page.

Alternatively, the mobile phone may identify, by using a preset gesture, whether a touch operation of the finger of the user is a comment event for the comment layer or a touch event for the first interface. For example, after the mobile phone loads the comment layer in the first interface, if the mobile phone detects that the user enters a press operation (that is, a preset gesture), the mobile phone may determine a subsequently detected touch event as the touch event for the first interface, and before the mobile phone detects that the user enters the press operation, the mobile phone may determine the touch event of the finger of the user as the comment event for the comment layer.

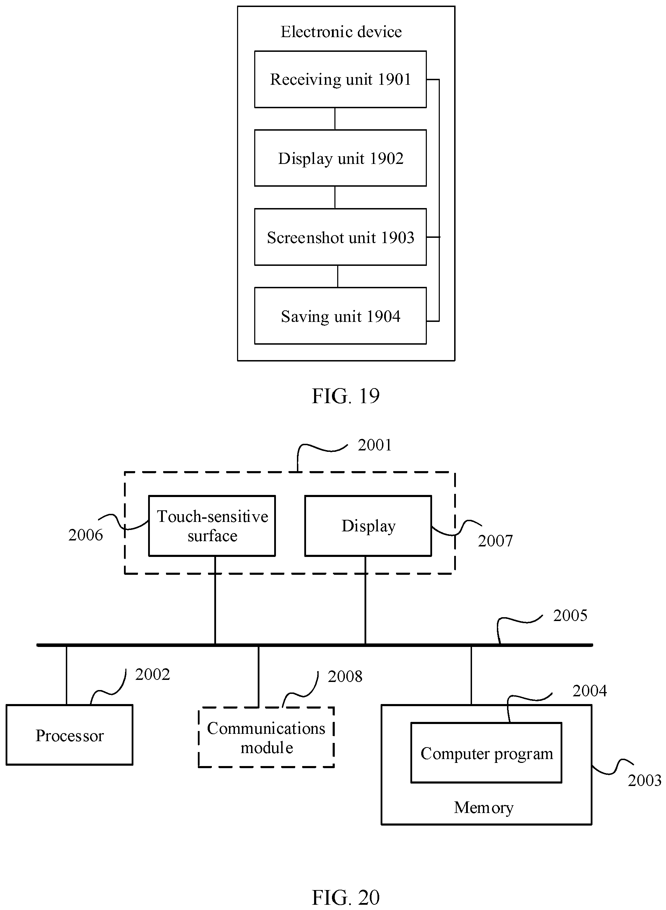

As shown in FIG. 19, an embodiment of this application discloses an electronic device. The electronic device may be configured to implement the methods recorded in the foregoing method embodiments. For example, the electronic device may specifically include a receiving unit 1901, a display unit 1902, a screenshot unit 1903, and a saving unit 1904. The receiving unit 1901 is configured to support the electronic device in performing the processes S501, S503, and S507 in FIG. 5. The display unit 1902 is configured to support the electronic device in performing the processes S502 and S506 in FIG. 5. The screenshot unit 1903 is configured to support the electronic device in performing the processes S504 and S508 in FIG. 5. The saving unit 1904 is configured to support the electronic device in performing the processes S505 and S509 in FIG. 5. All related content of the steps in the foregoing method embodiments may be cited in function descriptions of the corresponding functional modules. Details are not described herein again.

As shown in FIG. 20, an embodiment of this application discloses an electronic device, including a touchscreen 2001, one or more processors 2002, a memory 2003, and one or more computer programs 2004, where the touchscreen 2001 includes a touch-sensitive surface 2006 and a display 2007. The foregoing components may be connected through one or more communications buses 2005. The one or more computer programs 2004 are stored in the memory 2003 and are configured to be executed by the one or more processors 2002. The one or more computer programs 2004 include instructions, and the instructions may be used to perform the steps in the foregoing embodiments.

Optionally, still as shown in FIG. 20, the electronic device may further include a communications module 2008. The communications module 2008 may be configured to interact with a stylus.

For example, the processor 2002 may be specifically the processor 110 shown in FIG. 1, the memory 2003 may be specifically the internal memory 121 and/or the external memory 120 shown in FIG. 1, the display 2007 may be specifically the display 194 shown in FIG. 1, the communications module 2008 may be specifically the mobile communications module 150 and/or the wireless communications module 160 shown in FIG. 1, and the touch-sensitive surface 2006 may be specifically the touch sensor in the sensor module 180 shown in FIG. 1. This is not limited in this embodiment of this application.

Based on the foregoing descriptions of the implementations, a person skilled in the art may clearly understand that for the purpose of convenient and brief descriptions, division into the foregoing functional modules is merely used as an example for illustration. In actual application, the foregoing functions can be allocated to different functional modules for implementation based on a requirement, that is, an inner structure of an apparatus is divided into different functional modules to implement all or some of the functions described above. For a detailed working process of the foregoing system, apparatus, and unit, refer to a corresponding process in the foregoing method embodiments. Details are not described herein again.

Functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of the embodiments of this application essentially, or the part contributing to the conventional technology or all or some of the technical solutions may be implemented in a form of a software product. The computer software product is stored in a storage medium and includes several instructions for instructing a computer device (which may be a personal computer, a server, or a network device) or a processor to perform all or some of the steps of the methods described in the embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of the embodiments of this application, but are not intended to limit the protection scope of the embodiments of this application. Any variation or replacement within the technical scope disclosed in the embodiments of this application shall fall within the protection scope of the embodiments of this application. Therefore, the protection scope of the embodiments of this application shall be subject to the protection scope of the claims.

## Claims

1. A comment addition method, comprising:
displaying, by an electronic device, a first interface of a first application;
entering, by the electronic device, a comment mode in the first interface in response to a preset trigger operation, and in the comment mode, displaying, by the electronic device in the first interface, a first comment added by a user;
displaying, by the electronic device, a second interface of a second application, wherein the first application is different from the second application, and the first interface is different from the second interface; and
entering, by the electronic device, a comment mode in the second interface in response to the trigger operation, and in the comment mode, displaying, by the electronic device in the second interface, a second comment added by the user.

2. The method according to claim 1, wherein
after the entering, by the electronic device, a comment mode in the first interface, the method further comprises:
editing, by the electronic device, content in the first interface in response to a first editing operation entered by the user; and
after the entering, by the electronic device, a comment mode in the second interface, the method further comprises:
editing, by the electronic device, content in the second interface in response to a second editing operation entered by the user.

3. The method according to claim 1 or 2, wherein the entering, by the electronic device, a comment mode in the first interface comprises:
superimposing, by the electronic device, a comment layer on the first interface, wherein the comment layer comprises a first transparent region corresponding to the first interface; and
the displaying, by the electronic device in the first interface, a first comment added by a user comprises:
displaying, by the electronic device, the first comment entered by the user into the first transparent region in the first interface.

4. The method according to claim 3, wherein after the displaying, by the electronic device in the first interface, a first comment added by a user, the method further comprises:
displaying, by the electronic device, a third interface of the first application in response to a slide operation of a finger of the user, wherein a second transparent region in the comment layer is superimposed on the third interface.

5. The method according to claim 4, wherein after the displaying, by the electronic device, a third interface of the first application, the method further comprises:
displaying, by the electronic device, a third comment entered by the user into the second transparent region in the third interface.

6. The method according to any one of claims 1 to 5, wherein after the displaying, by the electronic device, a first comment added by a user in the first interface, the method further comprises:
in response to a saving operation entered by the user, performing, by the electronic device, a screenshot operation on the first interface that comprises the first comment, to obtain a first picture; and
saving, by the electronic device, the first picture.

7. The method according to claim 6, wherein when the performing, by the electronic device, a screenshot operation on the first interface that comprises the first comment, the method further comprises:
displaying, by the electronic device, a first notification message, wherein the first notification message is used to prompt the user that the first comment is being saved.

8. The method according to claim 5, wherein after the displaying, by the electronic device, a third comment entered by the user into the second transparent region in the third interface, the method further comprises:
in response to a saving operation entered by the user, performing, by the electronic device, a screenshot operation on the first interface and the third interface that respectively comprise the first comment and the third comment, to obtain a second picture; and
saving, by the electronic device, the second picture.

9. The method according to claim 8, wherein when the performing, by the electronic device, a screenshot operation on the first interface and the third interface that respectively comprise the first comment and the third comment, the method further comprises:
displaying, by the electronic device, a second notification message, wherein the second notification message is used to prompt the user that the first comment and the second comment are being saved.

10. The method according to claim 6 or 8, wherein
the saving, by the electronic device, the first picture comprises:
saving, by the electronic device, the first picture in a memo application; and
the saving, by the electronic device, the second picture comprises:
saving, by the electronic device, the second picture in the memo application.

11. The method according to claim 10, wherein the first picture and the second picture are located in a preset folder in the memo application.

12. The method according to claim 10, wherein a search bar is set in the memo application; and the method further comprises:
receiving, by the electronic device, a keyword entered by the user in the search bar, wherein the keyword is a text in the first picture; and
in response to a search operation entered by the user, displaying, by the electronic device, a memo list that is in the memo application and that comprises the keyword, wherein the memo list comprises a memo of the first picture.

13. The method according to claim 10, wherein after the saving, by the electronic device, the first picture, the method further comprises:
saving, by the electronic device, a correspondence between the first picture and the first interface; and
after the saving, by the electronic device, the first picture, the method further comprises:
if the electronic device detects that the user selects the first picture in the memo application, opening, by the electronic device, the first application to display the first interface; or
if the electronic device detects that the electronic device opens the first application to display the first interface, displaying, by the electronic device, a third notification message, wherein the third notification message is used to prompt the user that the comment associated with the first interface is found.

14. The method according to any one of claims 1 to 12, wherein the trigger operation comprises a preset operation performed by the user on a stylus; and
both the first comment and the second comment are comments added by the user by using the stylus.

15. The method according to claim 3 or 4, wherein the comment layer further comprises a toolbar, and the toolbar comprises one or more of an exit option, a save option, an eraser option, a line thickness option, or a line color option.

16. An electronic device, comprising:
a touchscreen, wherein the touchscreen comprises a display and a touch sensor;
one or more processors;
a memory; and
one or more computer programs, wherein the one or more computer programs are stored in the memory, the one or more computer programs comprise instructions, and when the instructions are executed by the electronic device, the electronic device is enabled to perform the comment addition method according to any one of claims 1 to 15.

17. The electronic device according to claim 16, wherein the electronic device further comprises a stylus; and the stylus is configured to enter a comment into the touchscreen.

18. A computer-readable storage medium, wherein the computer-readable storage medium stores instructions, and when the instructions are run on an electronic device, the electronic device is enabled to perform the comment addition method according to any one of claims 1 to 15

19. A computer program product comprising instructions, wherein when the computer program product runs on an electronic device, the electronic device is enabled to perform the comment addition method according to any one of claims 1 to 15.
